# EUROPEAN PATENT SPECIFICATION

(11) **EP 0 718 072 B1**
(45) Date of publication and mention of the grant of the patent: **09.07.2003**
(21) Application number: 95203448.6
(22) Date of filing: 12.12.1995
(51) Int. Cl.: B23K 35/28, B32B 15/01, C22F 1/04

(54) **Brazing sheet**
Hartlotfolie
Feuille de brasage

(30) Priority: 19.12.1994 EP 94203685
(43) Date of publication of application: 26.06.1996
(73) Proprietor: Corus Aluminium Walzprodukte GmbH, 56070 Koblenz (DE)
(72) Inventor: Miller, Sinclair William, NL-1941 JR Beverwijk (NL)
(74) Representative: Hansen, Willem Joseph Maria

(56) References cited:
- US-A- 4 146 164
- US-A- 4 649 087
- PATENT ABSTRACTS OF JAPAN vol. 17 no. 52 (C-1022) ,2 February 1993 & JP-A-04 263033 (FURUKAWA ALUM CO LTD) 18 September 1992,
- PATENT ABSTRACTS OF JAPAN vol. 16 no. 544 (C-1004) ,13 November 1992 & JP-A-04 202735 (FURUKAWA ALUM CO LTD) 23 July 1992,
- PATENT ABSTRACTS OF JAPAN vol. 14 no. 356 (C-745) ,2 August 1990 & JP-A-02 129333 (MITSUBISHI ALUM CO LTD) 17 May 1990,
- PATENT ABSTRACTS OF JAPAN vol. 17 no. 275 (M-1418) ,27 May 1993 & JP-A-05 008087 (FURUKAWA ALUM CO LTD) 19 January 1993,

## Description

### BACKGROUND OF THE INVENTION

### 1. FIELD OF THE INVENTION

The invention relates to brazing sheet having a core sheet of an aluminium alloy core material and a brazing layer of an aluminium alloy having silicon as the main alloying element on at least one side of the core sheet. The invention further relates to a method of making such a brazing sheet and to a process for manufacturing an assembly from the brazing sheet, as well as to an assembly thus manufactured.

### 2. DESCRIPTION OF THE PRIOR ART

Brazing sheet of this type is known and is used for automotive radiators, amongst other products. Two brazing methods, known as Nocolok and vacuum brazing, are conventional and need not be described here. Such brazing takes place at a temperature of about 600°C as determined by the aluminium silicon alloy of the brazing layer.

The brazing sheet disclosed by EP-A-326 337 consists of an AA 3005 type aluminium alloy core material and a brazing layer of an aluminium alloy having silicon as the main alloying element. This brazing sheet has a good corrosion resistance after brazing because a silicon-rich band of precipitates in the core material is formed near to the interface between the brazing layer and the core material by diffusion of silicon out of the brazing layer into the core material during brazing. The conditions for obtaining the silicon-rich band in the core material specified in EP-A-326 337 are limitations of the silicon and iron content in the core material of Si < 0.15 % and Fe < 0.40 % and further a manufacturing process of the brazing sheet in which the brazing sheet is not homogenized before hot rolling and is not interannealed after hot rolling. The copper content of the core material is about 0.3 % (herein all composition amounts are % by weight).

From WO94/22633 there is known an improvement of the brazing sheet of EP-A-326 337 having improved yield strength whilst the corrosion resistance is maintained. According to this publication the post-brazed yield strength of the brazing sheet of EP-A-326 337 is 55 MPa whilst the brazing sheet of WO94/22633 has a post-brazed yield strength in the range of 54-85 MPa. This is obtained at a copper content of 0.6 % whilst the silicon content is kept < 0.15 % to maintain the corrosion resistance properties.

Today the weight of cars should be reduced to reduce fuel consumption and air pollution. In connection therewith the weight and dimensions of automotive radiators and their cooling fluid content should be reduced by means of thinner brazing sheet having improved strength properties.

There are known aluminium alloys having better strength properties than those discussed above, but the present applicants believe that they do not meet the requirement of corrosion resistance when used as core material for brazing sheet.

Further prior art documents to be discussed in relation to the present invention are as follows.

JP-A-4-263033 specifies a brazing material having an aluminium core of the composition
Mn 0.3 - 1.5
Cu 0.2 - 0.9
Mg 0.2 - 0.5
Si 0.2 - 1.0
Fe 0.1 - 0.7
Ti 0.1 - 0.3
optionally Zr 0.05 - 0.2
optionally Cr 0.05 - 0.2
balance Al.
On one side this core has a conventional Al-Si brazing or filler layer, and on the other side it has a sacrificial anode layer of Al-Zn-Mg, whose purpose is to reduce corrosion of the core layer when in contact with water. The inclusion of Mg in the sacrificial anode layer is to permit Mg to diffuse into the core during brazing. Mg content in the core is generally at a low level, to prevent its diffusion into the brazing layer. The brazing material is made with an intermediate annealing step between hot rolling and cold rolling.

JP-A-4-202735 describes a similar brazing sheet having a sacrificial anode layer. The core material has the composition
Si 0.05 - 0.8
Fe 0.05 - 0.6
Cu 0.1 - 1.0
Mn 0.6 - 1.6
Mg 0.05 - 0.5
optionally Cr, Zr, Ti each ≤ 0.3
balance Al.
The document discusses formation of intermetallic compounds in the core material to improve strength and corrosion resistance. Homogenization and annealing were employed in the production of the sheet, presumably to ensure formation of the intermetallic compounds. It is stated that up to 1.5% Mg may be added to the sacrificial anode layer, to prevent diffusion of Mg from the core into this layer.

JP-A-2-129333 also describes a brazing sheet having a sacrificial anode layer of Al-Zn-Mg on the aluminium alloy core, but optionally the core may instead have a brazing layer on both sides. The core alloy composition is
Cu 0.1 - 0.6
Mg 0.2 - 0.6
Mn 0.3 - 1.5
Si 0.3 - 0.6
optionally Zr, Cr, Ti
balance Al.
In relation to the present invention, it is commented that, in the two examples in which the sacrificial anode layer is absent, (Cu + Mg) in the core is 0.48 and 0.40 respectively. Homogenization and annealing steps are both included in the manufacture of the sheet.

US-A-4 649 087 describes a core alloy for a brazing material, having the composition
Ti 0.11 - 0.30
Mn 0.3 - 1.5
Cu 0.4 - 0.6
Fe ≤ 0.7
Si ≤ 0.8
Mg ≤ 1.5
balance Al.
The concept described is the inclusion of Ti at higher levels, in order to improve corrosion resistance. In the examples, the core alloy was homogenized prior to hot rolling and intermediate annealing was performed between hot and cold rolling.

WO82/01014 describes a core alloy for brazing material in which Ni is present. The composition is
Fe 0.1 - 0.7 (in preferred composition 0.2 - 0.5)
Mn 1 - 1.5
Si 0.2 - 0.5 (in preferred composition 0.2 - 0.4)
Cu 0.2 - 0.5 (in preferred composition 0.25 - 0.5)
Mg ≤ 0.5
Ni 0.4 - 1.0
Cr ≤ 0.5
Zr ≤ 0.4
Ti 0.01 - 0.1
V ≤ 0.4
others total 0.15
balance Al.
In the preferred composition, (Cu + Mg) is 0.4 - 0.8. In one example (Cu + Mg) is 0.6, in another 0.65. In two others Mg < 0.05. The document proposes a high temperature post-brazing treatment at 450 - 550°C. The method of manufacture includes homogenization before hot rolling.

EP-A-241125 similarly describes a post-brazing heat treatment. In the examples, the Cu and Si levels in the core material are low.

JP-A-4-198448 is another document disclosing a brazing material having a sacrificial anode layer containing Mg on an aluminium alloy core material. The core material has the composition
Mn 0.3 - 2.0
Cu 0.25 - 0.8
Si 0.2 - 1.0
Mg ≤ 0.5
Ti ≤ 0.35
balance Al.
The sacrificial anode layer contains Mg 1.2 - 2.5 and Si 0.2 - 0.8. It is stated that Mg in the sacrificial anode layer diffuses into the core during brazing.

### SUMMARY OF THE INVENTION

The object of the invention is therefore to provide a brazing sheet having an aluminium alloy core and an aluminium alloy brazing layer, providing improved strength properties and at the same time good corrosion resistance.

The present invention, which is defined in claim 1, is based on the finding that, by careful choice of the core alloy composition, a brazing sheet of high post-brazing strength and high corrosion resistance can be obtained without the need for a sacrificial anode layer. Furthermore, the sheet of the invention undergoes post-brazing ageing to achieve very high strength levels. The method of manufacture of the sheet may also play a critical part.

It is a significant feature of the invention that the high yield strength of at least 70 MPa after ageing is combined with a good post-brazing corrosion resistance as determined in a SWAAT (ASTM G85) corrosion test. This corrosion resistance as determined by the SWAAT Test can be at least 24 or 25 days (600 hours).

As mentioned, the post-brazing yield strength of the brazing sheet of the invention is especially high after ageing. At the same time surprisingly the brazing sheet has a good corrosion resistance. This is against all metallurgical expectations and also contrary to the opinion presented in the state of the art (e.g. EP-A-326 337 and WO94/22633) according to which a low silicon content of less than 0.15 % is mandatory to obtain corrosion resistance.

For strength and corrosion resistance (Cu + Mg) > 1.0, and particularly preferably > 1.2. Thereby not only a good corrosion resistance after Nocolok brazing, and also after vacuum brazing, is obtained. For corrosion resistance it is required that Cu ≥ 0.65.

Preferably the silicon content in the-core material is ≥ 0.20, more preferably ≥ 0.30 and most preferably ≥ 0.40. A suitable maximum for Si is 1.0.

As indicated, optionally Cr, Zr and/or V are present in the composition of the core material, for example about 0.3 % Cr and about 0.1 % Zr, in order to obtain an extra improvement of the post-brazing strength properties.

Ti is present up to less than 0.1 to act as a grain refining additive, but preferably is less than 0.05.

Fe is usually present in commercial aluminium alloy but should not exceed 0.8, and preferably not exceed 0.4, in the present invention.

Zn also may typically be present as an impurity, in an amount of less than 0.25.

As is known in such alloys, small amounts of other elements may be tolerated as impurities. In general such elements are each present at less than 0.05, with a total of less than 0.15.

According to the invention the brazing sheet is capable of providing a 0.2 % yield strength of at least 70 MPa after brazing and ageing. Typically brazing is performed at about 600°C, and typical ageing processes for the obtaining of this yield strength are (i) natural ageing for 100 hours or 1000 hours or more and (ii) artificial ageing for at least 10 hours at about 165°C. Ageing is discussed further below.

In the invention, only one face of the core sheet has a clad layer. The brazing layer is present on one face of the core sheet, and may be a suitable Si-containing aluminium alloy brazing layer (filler layer) known in the art. Such layers may contain 5-14 % Si. Mg may be absent from these clad layers, or if present Mg may be in an amount not sufficient to result in migration of Mg into the core sheet during brazing. Such migration, to strengthen the core sheet, is a feature of some of the prior art discussed above, but is not required in the present invention since the core sheet already has sufficient strength.

In the manufacture of the brazing sheet of the invention preferably the alloy of the core sheet is a cast material which does not undergo homogenization after its casting prior to a hot rolling which is performed after application of the brazing layer. The sheet is not subjected to an intermediate annealing step between a hot rolling and a cold rolling, following the application of the brazing layer to the core sheet.

According to the invention, there is provided a method of making the brazing sheet of the invention described above, comprising the steps of
(i) casting the aluminium alloy core material
(ii) applying the brazing layer to a sheet of the aluminium alloy core material
(iii) hot rolling the aluminium alloy core material sheet and brazing layer
(iv) cold rolling the hot rolled product from step (iii)
wherein between steps (i) and (ii) the aluminium alloy core material is not subjected to a homogenization treatment and between steps (iii) and (iv) the product is not subjected to an annealing treatment.

The ageing after brazing may be natural ageing (at ambient temperature) and/or artificial ageing at an elevated temperature, preferably in the range of 100-250°C.

Natural ageing can result in a post-brazed 0.2 % yield strength of more than 85 MPa, e.g. at the level of 100 Mpa. A natural ageing period of 3 months is typical for this.

Artificial ageing can result in a post-brazed 0.2 % yield strength of more than 100 MPa, e.g. at the level of 200 MPa.

From the viewpoint of the manufacturers of such assembly and the furnaces available to them, preferably the artificial ageing is executed for a time period in the range of 1-100 hours. It is recommended to delay for at least four days after brazing, before the artificial ageing.

For example, the artificial ageing is executed at about 165°C for a time period in the range of 10-100 hours or at an equivalent combination of time and temperature giving a similar ageing effect.

This process results in high post-brazing strength properties. Particularly, the invention can provide brazing sheet which is capable of obtaining, after brazing at 600°C and post-brazing ageing at 165°C during a time in the range 10 to 100 hours, a 0.2% yield strength which is at least twice its 0.2% yield strength immediately after brazing at 600°C.

In order for natural and artificial ageing to occur, it appears to be desirable that those elements (Mg,Si, Cu) that cause this to occur must be present in solid solution after the completion of the brazing process. If, after brazing, the product is cooled very slowly, then these elements will precipitate in coarse particles and there will be no natural or artificial ageing. The faster the cooling rate the more of these elements will be retained in solution and hence the higher will be the response of the material to natural and artificial ageing.

Preferably therefore the brazing sheet is cooled in air from the brazing temperature or is cooled more rapidly than by natural air cooling. However, water quenching is not practical for brazed components.

### BRIEF INTRODUCTION OF THE DRAWINGS

Embodiments of the invention will now be described by way of non-limitative example with reference to the accompanying drawings in which:-
Fig. 1 is a graph of 0.2 % yield strength (in MPa) plotted against ageing time (hours) for a post-brazing natural ageing process of eight brazing sheets.
Fig. 2 is a similar graph for an artificial ageing process performed after the natural ageing of the same eight alloys.
Fig. 3 is a graphical representation of the invention plotting Si content (in weight %) against (Cu + Mg) content (in weight %) of the core sheet alloy.

### DESCRIPTION OF THE PREFERRED EMBODIMENTS

### Example 1

A number of test alloys for core sheet material were made with compositions in weight % as shown in Table 1.

**Table 1**

| Alloy | Mn | Cu | Mg | Si |
|---|---|---|---|---|
| C1* | 1.1 | 0.3 | 0.25 | 0.1 |
| C2* | 1.1 | 0.3 | 0.25 | 0.5 |
| C3* | 1.1 | 0.3 | 0.5 | 0.1 |
| C4* | 1.1 | 0.3 | 0.5 | 0.5 |
| C5* | 1.1 | 0.75 | 0.25 | 0.1 |
| C6* | 1.1 | 0.75 | 0.25 | 0.5 |
| C7* | 1.1 | 0.75 | 0.5 | 0.1 |
| C8 (invention) | 1.1 | 0.75 | 0.5 | 0.5 |

| | | | | |
|---|---|---|---|---|
| * Comparative alloys | | | | |

Balance Al, Fe at normal impurity level (less than 0.8) and unavoidable impurities

In this table the alloys C1 and C3 are within the composition known from EP-A-326 337 and the alloys C5 and C7 of this type are known from WO94/22633.

The test alloys were not homogenized after casting and are clad on one side with an AA 4045 type aluminium alloy with 9.0 - 11.0 silicon as the main alloying element, hot rolled and cold rolled to a thickness of 0.39 mm without intermediate annealing. Thereafter the brazing sheet was subjected to Nocolok and vacuum brazing in a conventional manner. After brazing, the samples were cooled in air of ambient temperature.

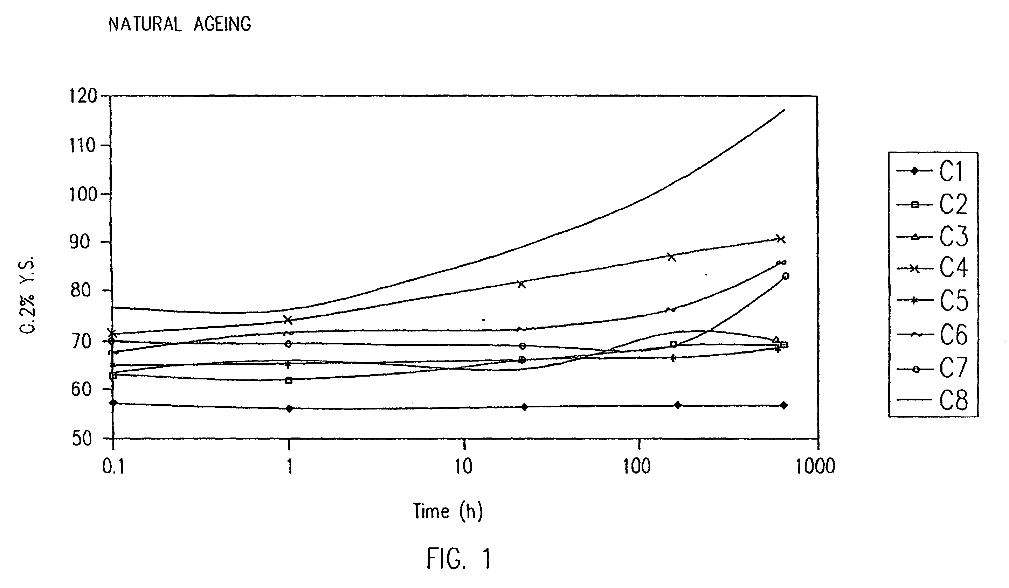

Fig. 1 shows post-brazed 0.2 % yield strengths of these brazing sheets in natural ageing. The alloys C1 and C3 falling within the scope of EP-A-326 337 have yield strengths in the range of 55-65 MPa. The value of 55 MPa mentioned in WO94/22633 is confirmed by alloy C1. The alloys C5 and C7 falling within the scope of WO94/22633 have yield strengths in the range of 65-85 MPa. This confirms the values mentioned in WO94/22633. The alloys C4, C6 and C8 have yield strengths above 85 MPa after natural ageing, the yield strength of C8 running up to about 115 MPa.

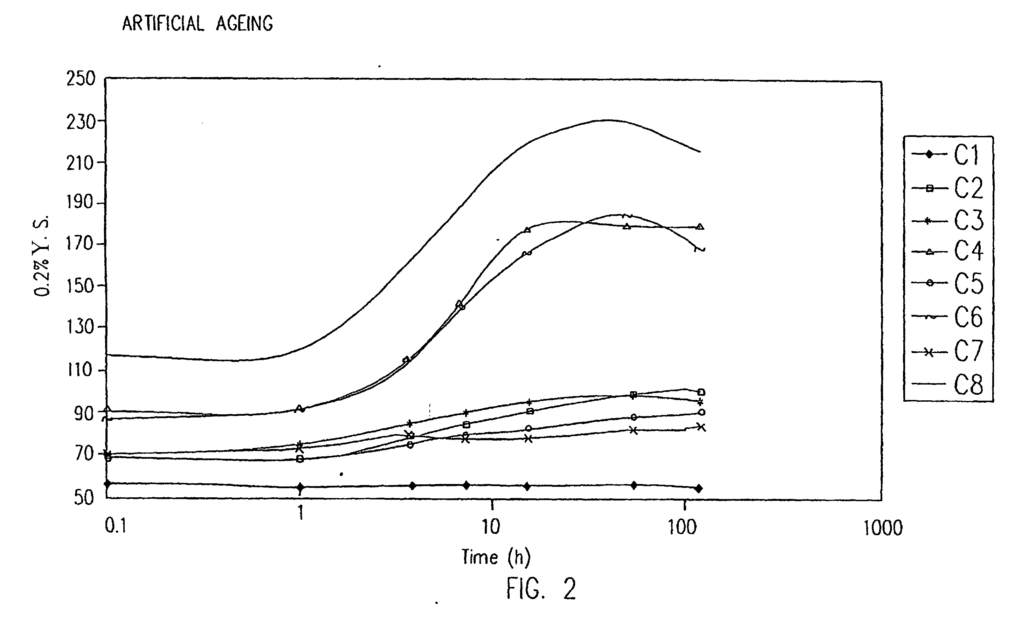

Fig. 2 shows post-brazed 0.2 % yield strengths in artificial ageing at a temperature of 165°C. The artificial ageing was in this case applied on test pieces which had been naturally aged for 3 months (but the duration of natural ageing prior to artificial ageing does not significantly change the properties obtained by the artificial ageing). The alloys C1, C3, C5, C7 and C2 show no or almost no ageing effects. The alloys C4, C6 and C8 show substantial ageing effects. For artificial ageing at 165°C 0.2 % yield strengths above 100 MPa are obtained. C8 shows a maximum of about 230 MPa for brazing sheet having been artificial aged during a time in the range of 10-100 hours. At higher ageing temperature the time will be shorter. Manufacturers may wish to apply a time in the order of magnitude of one day or a part thereof.

The results in Figs. 1 and 2 apply for both Nocolok and vacuum brazing.

The brazing sheets were subjected to a SWAAT (ASTM G85) corrosion test in the Nocolok and the vacuum brazed condition. Target-life is 600 hours (25 days). Results are shown in Table 2.

**Table 2**

| Alloy | Average SWAAT life | |
|---|---|---|
| Braze system | Nocolok | Vacuum |
| Units | Days | Days |
| C1 | NR* | NR* |
| C2 | 3.3 | 7 |
| C3 | NR* | > 25** |
| C4 | > 24** | 4 |
| C5 | > 24** | > 25** |
| C6 | > 24** | 7 |
| C7 | NR* | NR* |
| C8 | > 24** | > 25** |

| | | |
|---|---|---|
| *NR = No results available | | |
| ** = SWAAT test discontinued after days shown | | |

Alloys C3 and C5 show acceptable results as expected. Alloy C2 shows results that are not acceptable as could be expected from prior art disclosures in view of its high silicon content in the base material. Most surprisingly however alloys C4, C6 and C8 have a result of at least 24 days in the Nocolok brazed condition, and alloy C8, in which both Cu and Mg are high, at least 25 days in the vacuum brazed condition. It is believed that the alloys C4 and C6 have less good corrosion resistance after vacuum brazing, due to lower Cu or lower Mg. Mg tends to evaporate in vacuum brazing.

### Example 2

A test alloy was made having the composition of alloy C8 but with 0.3 % Cr and 0.1 % Zr added to the composition. This alloy was tested in the same way as in Example 1. The alloy had a good corrosion resistance. The 0.2 % yield strength was about 15 MPa higher than that of alloy C8.

Table 3 below gives values of the mechanical properties of the brazing sheets with the alloys C1-C8, in the three states (1) post-brazing without ageing, (2) after natural ageing and (3) after artificial ageing at 165°C. The table gives 0.2 % yield strength (YS), ultimate tensile strength (UTS) and elongation at break (E).

**Table 3**

| Alloy | Post Braze properties | | | Natural Ageing properties* | | | Artificial Ageing properties ** | | |
|---|---|---|---|---|---|---|---|---|---|
| | 0.2% YS (MPa) | UTS (MPa) | E [%] | 0.2% YS (MPa) | UTS [MPa] | E [%] | 0.2% YS (MPa) | UTS [MPa] | E [%] |
| C1 | 58 | 147 | 15.1 | 62 | 152 | 14 | 56 | 147 | 14.4 |
| C2 | 63 | 163 | 11.6 | 66 | 165 | 12.1 | 102 | 178 | 7 |
| C3 | 64 | 165 | 15.2 | 70 | 168 | 12.7 | 100 | 186 | 9.7 |
| C4 | 72 | 181 | 13.3 | 93 | 204 | 12.7 | 183 | 240 | 2.8 |
| C5 | 65 | 176 | 14.1 | 70 | 176 | 11.1 | 92 | 186 | 9.3 |
| C6 | 68 | 184 | 15.1 | 92 | 219 | 14.3 | 191 | 248 | 4.3 |
| C7 | 70 | 186 | 15.4 | 102 | 225 | 16.7 | (160)*** | ... | ... |
| C8 | 77 | 201 | 12.2 | 118 | 247 | 11.6 | 233 | 274 | 3.6 |

| | | | | | | | | | |
|---|---|---|---|---|---|---|---|---|---|
| * Properties after three months of natural ageing. | | | | | | | | | |
| ** Properties at peak strength obtained in artificial ageing at 165°C (the time to obtain peak strength is different for each alloy). | | | | | | | | | |
| *** Value obtained at 180°C for 120 hours, not peak strength (no artificial ageing strength increase occurred at 165°C for 120 hours). | | | | | | | | | |

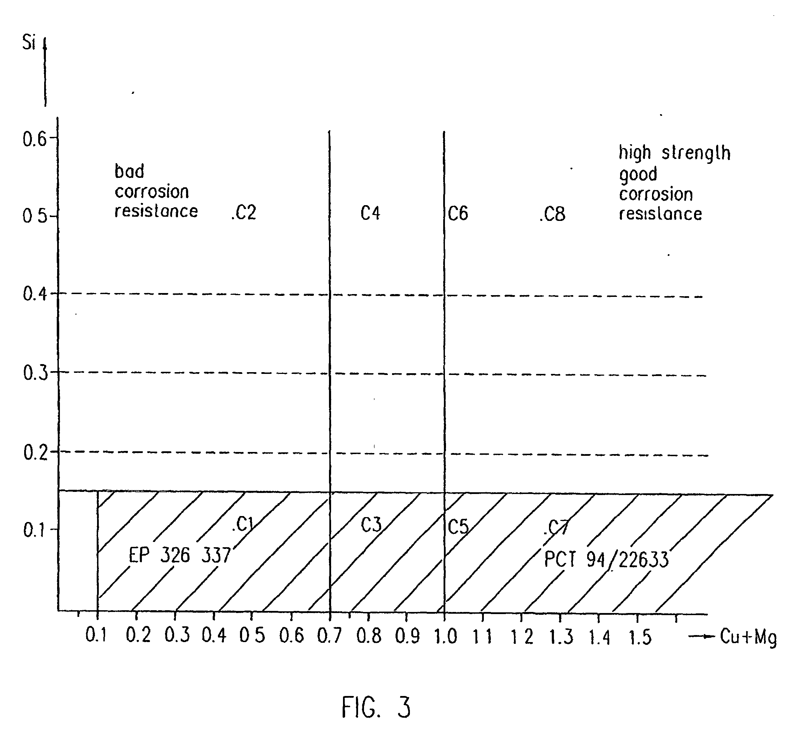

In Fig. 3 by "good corrosion resistance" there is indicated the area in which core material used in accordance with the invention has a good post-brazed SWAAT corrosion resistance of for example about 25 days. Further the area of EP-A-326 337 including alloys C1 and C3 and the area of WO94/22633 including C5 and C7 is indicated. The alloy C2 is outside the area of "good corrosion resistance".

The present applicants have as yet no metallurgical explanation for the effect discovered. It is as yet uncertain whether a silicon-rich band of precipitates is formed in the core material, but it appears to be desirable to leave out homogenization during manufacturing.

## Claims

1. Brazing sheet for use in the manufacture of brazed assemblies such as automotive radiators, consisting of a sheet made of an aluminium alloy core material and on one side thereof a brazing layer of an aluminium alloy containing silicon as main alloying element, the brazing sheet thus being devoid of a sacrificial anode layer, **characterised in that** the aluminium alloy core material has the composition (in weight %)
Mn 0.7 - 1.5
Cu 0.65 - 2.0
Mg 0.1 - 0.6
Si > 0.15 - 1.0
Fe up to 0.8
Ti optional, < 0.1
Cr optional, up to 0.35
Zr and/or V optional, up to 0.25 in total
Zn < 0.25
other elements each < 0.05, with a total < 0.15
balance Al, with the proviso that (Cu + Mg) > 1.0,
so as to obtain a good post-brazing corrosion resistance in the absence of a sacrificial anode layer, wherein the brazing sheet is capable of obtaining, following brazing and post-brazing ageing, a 0.2 % yield strength of at least 70 MPa.

2. Brazing sheet according to claim 1 wherein the amount of Ti In said composition of the aluminium alloy of the core sheet is less than 0.05.

3. Brazing sheet according to claim 1 or 2 wherein the amount of Fe in said composition of the aluminium alloy of the core sheet is not more than 0.4.

4. Brazing sheet according to any one of claims 1 to 3 wherein in said composition of the aluminium alloy of the core sheet (Cu + Mg) > 1.2.

5. Brazing sheet according to any one of claims 1 to 4 wherein the amount of Si in said composition of the aluminium alloy of the core sheet is not less than 0.20.

6. Brazing sheet according to claim 5 wherein the amount of Si in said composition of the aluminium alloy of the core sheet is not less than 0.30.

7. Brazing sheet according to claim 6 wherein the amount of Si in said composition of the aluminium alloy of the core sheet is not less than 0.40.

8. Brazing sheet according to any one of claims 1 to 7 wherein said aluminium alloy of said core sheet is a cast material which has not been subjected to a homogenization treatment after its casting prior to a hot rolling performed after the application to it of said brazing layer or layers.

9. Brazing sheet according to any one of claims 1 to 8 wherein said brazing material has been subjected to hot rolling and then cold rolling, after the application of said brazing layer or layers to said core sheet, without intermediate annealing between said hot and cold rolling.

10. Brazing sheet according to any one of claims 1 to 9 having a good post-brazing corrosion resistance of at least 600 hours as determined in a SWAAT (ASTM G85) corrosion test.

11. Brazing sheet according to any one of claims 1 to 10 which is capable of obtaining, after brazing at 600°C and post-brazing ageing at 165°C during a time in the range 10 to 100 hours, a 0.2% yield strength which is at least twice its 0.2% yield strength immediately after brazing.

12. Method of making brazing sheet according to any one of claims 1 to 11, comprising the steps of
(i) casting said aluminium alloy core material;
(ii) applying said brazing layer to a sheet of said aluminium alloy core material;
(iii) hot rolling the said aluminium alloy core material sheet and said brazing layer;
(iv) cold rolling the hot rolled product from step (iii),
wherein between said steps (i) and (ii) said aluminium alloy core material is not subjected to a homogenization treatment and between said steps (iii) and (iv) said product is not subjected to an annealing treatment.

## Patentansprüche

1. Hartlotfolie zur Verwendung bei der Herstellung von hartgelöteten Baugruppen wie Kfz-Kühlern, die aus einer Folie besteht, die aus einem Aluminiumlegierungskernmaterial hergestellt ist und an einer Seite eine Hartlotschicht aus einer Aluminiumlegierung hat, die Silicium als Hauptlegierungselement enthält, wobei die Hartlotfolie damit keine Opferanodenschicht hat, **dadurch gekennzeichnet, daß** das Aluminiumkernmaterial folgende Zusammensetzung (in Gew.-%) hat:
Mn 0,7 - 1,5
Cu 0,65 - 2,0
Mg 0,1 - 0,6
Si > 0,15 - 1,0
Fe bis 0,8
Ti ggf., < 0,1
Cr ggf., bis 0,35
Zr und/oder V ggf., bis 0,25 gesamt
Zn < 0,25
andere Elemente jeweils < 0,05, gesamt < 0,15
Rest Al, mit der Maßgabe, daß (Cu + Mg) > 1,0 ist,
so daß eine gute Nachhartlötkorrosionsbeständigkeit in Abwesenheit einer Opferanodenschicht erhalten ist, wobei die Hartlotfolie nach dem Hartlöten und Hartlötaltern eine 0,2% Dehngrenze von wenigstens 70 MPa erhalten kann.

2. Hartlotfolie nach Anspruch 1, bei welcher die Menge an Ti in der Zusammensetzung der Aluminiumlegierung der Kernfolie weniger als 0,05 beträgt.

3. Hartlotfolie nach Anspruch 1 oder 2, bei welcher die Menge an Fe in der Zusammensetzung der Aluminiumlegierung der Kernfolie nicht mehr als 0,4 beträgt.

4. Hartlotfolie nach einem der Ansprüche 1 bis 3, bei welcher in der Zusammensetzung der Aluminiumlegierung der Kernfolie (Cu + Mg) > 1,2.

5. Hartlotfolie nach einem der Ansprüche 1 bis 4, bei welcher die Menge an Si in der Zusammensetzung der Aluminiumlegierung der Kernfolie nicht weniger als 0,20 beträgt.

6. Hartlotfolie nach Anspruch 5, bei welcher die Menge an Si in der Zusammensetzung der Aluminiumlegierung der Kernfolie nicht weniger als 0,30 beträgt.

7. Hartlotfolie nach Anspruch 6, bei welcher die Menge an Si in der Zusammensetzung der Aluminiumlegierung der Kernfolie nicht weniger als 0,40 beträgt.

8. Hartlotfolie nach einem der Ansprüche 1 bis 7, bei welcher die Aluminiumlegierung der Kernfolie ein Gußwerkstoff ist, der nach dem Guß vor einem Warmwalzen keiner Homogenisierungsbehandlung unterworfen wurde, das nach dem Aufbringen der Hartlotschicht oder -schichten durchgeführt wurde.

9. Hartlotfolie nach einem der Ansprüche 1 bis 8, bei dem das Hartlotmaterial ohne Zwischenglühen zwischen Warmwalzen und Kaltwalzen nach dem Aufbringen der Hartlotschicht oder - schichten auf die Kernfolie Warmwalzen und dann Kaltwalzen unterworfen wurde.

10. Hartlotfolie nach einem der Ansprüche 1 bis 8 mit einer guten Nachhartlötkorrosionsbeständigkeit von wenigstens 600 Stunden nach der Ermittlung in einem SWAAT-Korrosionstest (ASTM G85).

11. Hartlotfolie nach einem der Ansprüche 1 bis 10, die in der Lage ist, nach dem Hartlöten bei 600°C und dem Nachhartlötaltern bei 165°C während einer Zeit im Bereich von 10 bis 100 Stunden eine 0,2% Dehngrenze zu erhalten, die wenigstens das Zweifache ihrer 0,2% Dehngrenze unmittelbar nach dem Hartlöten ist.

12. Verfahren zum Herstellen der Hartlotfolie nach einem der Ansprüche 1 bis 11, das folgende Schritte umfaßt:
(i) das Aluminiumlegierungskernmaterial wird gegossen;
(ii) die Hartlotschicht wird auf eine Folie aus dem Aluminiumkernmaterial aufgebracht;
(iii) die Folie aus dem Aluminiumlegierungskernmaterial und die Hartlotschicht werden warmgewalzt;
(iv) das warmgewalzte Produkt aus Schritt (iii) wird kaltgewalzt,
wobei das Aluminiumlegierungskernmaterial zwischen den Schritten (i) und (ii) keiner Homogenisierungsbehandlung unterworfen wird und das Produkt zwischen den Schritten (iii) und (iv) keiner Glühbehandlung unterworfen wird.

## Revendications

1. Tôle à brasage destinée à la fabrication d'ensembles brasés tels que des radiateurs pour automobiles, constituée par une tôle comportant une matière centrale en alliage d'aluminium et, sur une seule face de celle-ci, une couche de brasage en alliage d'aluminium dont le principal élément d'alliage est du silicium, la tôle à brasage ne comportant donc pas de couche formant anode consommable, **caractérisée en ce que** la matière centrale en alliage d'aluminium a la composition suivante (en pourcentages de poids):
Mn 0,7 - 1,5
Cu 0,65 - 2,0
Mg 0,1 - 0,6
Si > 0,15 - 1,0
Fe maximum 0,8
Ti facultatif, inférieur 0,1
Cr facultatif jusqu'à 0,35
Zr et/ou V facultatifs, au total jusqu'à 0,25
Zn < 0,25
autres éléments, chacun < 0,05, avec un total < 0,15
le reste étant composé de Al, à condition que (Cu + Mg) > 1,0
afin d'obtenir une bonne résistance à la corrosion après brasage en l'absence d'une couche formant anode consommable, la tôle à brasage étant apte à obtenir, après brasage et à la suite d'un vieillissement d'après brasage, une limite d'élasticité de 0,2% à au moins 70 MPa.

2. Tôle à brasage selon la revendication 1, dans laquelle le pourcentage de Ti dans ladite composition de l'alliage d'aluminium de la feuille centrale est inférieur à 0,05.

3. Tôle à brasage selon la revendication 1 ou 2, dans laquelle le pourcentage de Fe dans ladite composition de l'alliage d'aluminium de la feuille centrale n'est supérieur à 0,4.

4. Tôle à brasage selon l'une quelconque des revendications 1 à 3, dans laquelle, dans ladite composition de l'alliage d'aluminium de la feuille centrale, (Cu + Mg) > 1,2

5. Tôle à brasage selon l'une quelconque des revendications 1 à 4, dans laquelle, le pourcentage de Si dans ladite composition de l'alliage d'aluminium de la feuille centrale n'est pas inférieur à 0,20.

6. Tôle à brasage selon la revendication 5, dans laquelle la proportion de Si dans ladite composition de l'alliage d'aluminium de la feuille centrale n'est pas inférieure à 0,30.

7. Tôle à brasage selon la revendication 6, dans laquelle le pourcentage de Si dans ladite composition de l'alliage d'aluminium de la feuille centrale n'est pas inférieur à 0,40

8. Tôle à brasage selon l'une quelconque des revendications 1 à 7, dans laquelle ledit alliage d'aluminium de ladite feuille centrale est une matière coulée qui n'a pas subi de traitement d'homogénéisation après sa coulée avant un laminage à chaud effectué après l'application, sur celle-ci, de ladite/desdites couches de brasage.

9. Tôle à brasage selon l'une quelconque des revendications 1 à 8, dans laquelle ladite matière à brasage a subi un laminage à chaud puis un laminage à froid, après l'application de ladite/desdites couches de brasage sur ladite feuille centrale, sans recuit intermédiaire entre lesdits laminages à chaud et à froid.

10. Tôle à brasage selon l'une quelconque des revendications 1 à 9 ayant une bonne résistance à la corrosion après brasage à l'issue d'au moins 600 heures, comme déterminé lors d'un essai de corrosion SWAAT (ASTM G85).

11. Tôle à brasage selon l'une quelconque des revendications 1 à 10, apte à obtenir, après brasage à 600°C et à l'issue d'un vieillissement d'après brasage à 165° pendant une durée comprise entre 10 et 100 heures, une limite d'élasticité de 0,2% qui est au moins deux fois supérieure à sa limite d'élasticité de 0,2% juste après le brasage.

12. Procédé de fabrication d'une tôle à brasage selon l'une quelconque des revendications 1 à 11, comprenant les étapes consistant à:
(i) couler ladite matière centrale en alliage d'aluminium;
(ii) appliquer ladite couche de brasage sur une feuille de ladite matière centrale en alliage d'aluminium;
(iii) laminer à chaud ladite feuille de matière centrale en alliage d'aluminium et ladite couche de brasage;
(iv) laminer à froid le produit laminé à chaud résultant de l'étape (iii),
**caractérisé en ce que**, entre lesdites étapes (i) et (ii), ladite matière centrale en alliage d'aluminium ne subit pas de traitement d'homogénéisation et, entre lesdites étapes (iii) et (iv), ledit produit ne subit pas de traitement de recuit.
